## Europäisches Patentamt

(19) **European Patent Office**

**Office européen des brevets**

(11) Veröffentlichungsnummer: **0 163 096**
**B1**

(12) # EUROPÄISCHE PATENTSCHRIFT

(45) Veröffentlichungstag der Patentschrift:
**17.11.88**

(51) Int. Cl.⁴: **G 06 F 11/14**

(21) Anmeldenummer: **85104649.0**

(22) Anmeldetag: **17.04.85**

(54) **Einrichtung zur Rettung eines Rechnerzustandes.**

(30) Priorität: **26.04.84 CH 2053/84**

(43) Veröffentlichungstag der Anmeldung:
**04.12.85 Patentblatt 85/49**

(45) Bekanntmachung des Hinweises auf die Patenterteilung:
**17.11.88 Patentblatt 88/46**

(84) Benannte Vertragsstaaten:
**CH DE FR GB LI**

(56) Entgegenhaltungen:
WO - A - 84/02409
DE - A - 2 163 162
DE - A - 2 240 432
FR - A - 2 268 306

CONFERENCE PROCEEDINGS, THE 9th ANNUAL SYMPOSIUM ON COMPUTER ARCHITECTURE, 26.-29. April 1982, Austin, Texas, Seiten 171-180, IEEE, New York, US; YANN-HANG LEE u.a.: "Rollback propagation detection and performance evaluation of FTMR2M -- a fault-tolerant multiprocessor"
FTCS 12th ANNUAL INTERNATIONAL SYMPOSIUM FAULT-TOLERANT COMPUTING, 22.-24. Juni 1982, Santa Monica, Californien, Seiten 127-133, IEEE, New York, US; C. KUBIAK u.a.: "Penelope: a recovery

(73) Patentinhaber: **BBC Brown Boveri AG, Haselstrasse, CH-5401 Baden (CH)**

(72) Erfinder: **Kirrmann, Hubert, Im Rüteli 17, CH-5405 Baden (CH)**

(56) Entgegenhaltungen: (Fortsetzung)
mechanism for transient hardware failures and software errors"
IEEE TRANSACTIONS ON COMPUTERS, Band C-29, Nr. 6, Juni 1980, Seiten 546-549, IEEE, New York, US; P.A. LEE u.a.: "A recovery cache for the PDP-11"
"Proceedings of the 12th International Conference on Fault Tolerant Computing FTSC-12", 1982, Seiten 127-132;

## Beschreibung

Bei der Erfindung wird ausgegangen von einer Einrichtung zur Rettung eines Rechnerzustandes nach dem Oberbegriff des Patentanspruchs 1.

Grundsätzlich werden bei Rechnern drei Arten der Unterbrechung, mit zunehmendem Schwierigkeitsgrad bei der Behandlung, angetroffen:
- Die klassische Programmunterbrechung, die durch ein äusseres Ereignis mit einer Unterbrechungsanforderung ausgelöst wird und die nach Beendigung der laufenden Instruktion durch den Prozessor abgearbeitet wird. Die Hardware des Prozessors sorgt dafür, dass der Programmzähler und das Statuswort als erste im Arbeitsspeicher gerettet werden, damit nach der Abarbeitung der Unterbrechung der Prozessor den Zustand vor der Unterbrechung wiederherstellen kann.
- Die Instruktionsunterbrechung, die auftritt, wenn die laufende Instruktion nicht zu Ende bearbeitet werden kann, z.B. in einem System mit einem virtuellen Speicher, wegen eines Leergriffes auf dem physikalischen Speicher oder in einem System mit Fehlerdetektion wegen eines Busfehlers. Diese Instruktionsunterbrechung zwingt den Prozessor dazu, die Instruktion zu verlassen und ein Programm abzuarbeiten, das den fehlenden Speicherabschnitt aus dem Massenspeicher holt, bzw. das den misslungenen Buszugriff wiederholt. Danach soll die unterbrochene Instruktion weitergerechnet werden. Da der Prozessor mitten in einer Instruktion unterbrochen wird, muss er genügend Information aus seinem inneren Zustand retten, damit er die unterbrochene Instruktion nach Bereitstellung der Daten oder nach Korrektur wieder fortsetzen kann. Dies erfordert wesentlich mehr Aufwand als die klassische Programmunterbrechung. Eine solche Einrichtung besitzt der Mikroprozessor MC 68010, der in der deutschen Zeitschrift Elektronik, Heft 22, 1983, S. 75–78, beschrieben ist.
- Der Ausfall gilt als der schwierigste Unterbrechungsfall, da der Zustand des Prozessors nach Entdeckung des Ausfalles nicht mehr gerettet werden kann, wie dies bei den oben genannten Fällen geschah, da es unsicher ist, ob der Prozessor den Ausfall intakt überstanden hat. Auch ist nicht bekannt, wie lange der Ausfall schon dauert und was er für Auswirkungen auf den Rechnerzustand hatte. Der Inhalt des Arbeitsspeichers gilt auch dann als verdächtig, wenn alle Fehlerdetektionskode der Speicherzellen stimmen, da Unsicherheit darüber besteht, was für Aktionen der bereits beschädigte Prozessor ausgeführt hat. Für den Ausfall sind bei den bekannten Mikroprozessoren keine Vorsorgemassnahmen getroffen worden.

In der USA-Veröffentlichung «Proceedings of the 12th International Conference on Fault Tolerant Computing FTSC-12», 1982, pp 127–132 wird unter dem Titel «Penelope: A Recovery Mechanism For Transient Hardware Failure And Software Errors» von Kubiak et al. eine Einrichtung beschrieben, die zwischen einem Prozessor und seinem Arbeitsspeicher eingefügt ist und die es erlaubt, im Falle eines Ausfalles einen früheren Betriebszustand sowohl des Speichers wie des Prozessors wiederherzustellen. Diesen früheren Zustand definiert ein Rückzugspunkt (Recovery Point).

Diese Einrichtung ist am Prozessorbus angeschlossen und verfolgt die Busgriffe, mit denen der Prozessor den Zustand des Arbeitsspeichers verändert (Schreibzyklen). Jeweils bevor eine Variable im Arbeitsspeicher verändert wird, adressiert diese Einrichtung, die «Rettungsstapel» (Save Stack) genannt wird, die betroffene Variable, liest den früheren Inhalt und rettet ihn in einem Stapelspeicher (Stack).

Am Anfang eines Programmabschnittes, also an einem Rückzugspunkt, ist der Rettungsstapel leer. Der Zustand des Rechners an diesem Rückzugspunkt soll wiederhergestellt werden können, falls es zu einem Ausfall kommt, bevor der nächste Rückzugspunkt erreicht wird. Nach Entdeckung eines Ausfalles wird der Prozessor neu initialisiert, und der Rettungsstapel wird rückwärts in den Arbeitsspeicher zurückgeschrieben. Dadurch bekommen alle Variablen ihren früheren Wert, nämlich denjenigen, den sie hatten, als der Rettungsstapel leer war, also am letzten Rückzugspunkt, auch wenn dieser Wert mehrmals inzwischen verändert wurde.

Die obengenannte Veröffentlichung basiert auf einer früheren Arbeit von P.A. Lee, N. Ghani, K. Heron, A recovery Cache for the PD 11, Proc. of FTCS 9 Madison 1979, pp. 3-8, die in der Literaturliste der obengenannten Veröffentlichung zitiert ist. Andere und frühere Erfinder benützen für das gleiche Verfahren einen Cache-Speicher, ohne dass das Prinzip, das man als «Retten vor Ändern» nennt, davon tangiert wäre. Im Hinblick auf dieses Prinzip können weiter genannt werden: FR-A 2 268 306, DE-A2 22 40 432, DE-A1 21 63 162 und «IEEE Transactions on Computers», Band C-29, Nr. 6, Juni 1980, S. 546–549. Das «Retten vor Ändern»-Verfahren weist drei entscheidende Nachteile auf:

1. Es gibt nur einen Schutz gegen Fehlfunktionen des Prozessors, die keine zweideutige Auswirkungen auf den Arbeitsspeicher haben, z.B. marginale oder falsche Steuerungssignale, die eine Veränderung der Adresse oder der Daten zur Folge haben, ohne dass der Rettungsstapel davon erfährt.

2. Fehler oder Verluste des Arbeitsspeichers selbst können nicht korrigiert werden. Es wird nach dem Ausfall angenommen, dass alle Speicherzellen, die seit dem letzten Rückzugspunkt nicht zum Schreiben adressiert wurden, auch tatsächlich noch intakt sind.

3. Der Rettungsstapel kann nur einmal zur Wiederherstellung herangezogen werden. Falls es zu einem Ausfall während des Rückschreibens kommen sollte, ist der frühere Inhalt des Arbeitsspeichers nicht mehr wiederherstellbar.

Aus Conference Proceedings, the 9th Annual Symposium on Computer Architecture», 26.–29.04.82, Seiten 171–180 ist ein Multiprozessorsystem mit mehreren Prozessormodulen bekannt, die jeweils einen Prozessor, einen lokalen Speicher und sog. Zustands-Rettungs-Einheiten als Archivspeicher enthalten. Die Prozessoren retten ihren Zustand (Variablen und Registerinhalte) an verschiedenen Punkten der Programmausführung in regelmässigen Abständen. Zur Verringerung der für die Zustandsrettung erforderlichen Zeit wird diese während des Programmablaufs ausgeführt. Jede Änderung von Variablen in den lokalen Speichern wird in den Zustands-Rettungs-Einheiten simultan registriert. Zwei solcher Einheiten sind vorgesehen zur Rettung des Zustandes in zwei aufeinanderfolgenden Intervallen. Jeder Prozessor hält einen gültigen Zustand in einer der beiden Einheiten fest, während er den sich aktuell ändernden Zustand in den jeweils anderen abspeichert. Da demnach die aktuellen Änderungen nur in jeweils einer der beiden Einheiten registriert werden, muss die jeweils andere Einheit an jedem Programmrückzugspunkt aktualisiert werden. Dies erfolgt entweder dadurch, dass der Inhalt der zu aktualisierenden Einheit mit dem Inhalt der im gerade abgelaufenen Intervall aktualisierten Einheit in Übereinstimmung gebracht wird oder indem lediglich die Variablen, die im gerade abgelaufenen Intervall geändert wurden, in die zu aktualisierende Einheit kopiert werden. Im Zusammenhang mit der letztgenannten Methode wird auf einen Artikel von A. M. Feridun und K. G. Skin «A Fault-Tolerant Multiprocessor System with Rollback Recovery Capabilities» Proc. 2nd Int'l Conf. on Distributed Computing Systems, April 1981, verwiesen. Dort wird die Führung einer zusätzlichen Bitliste zur Markierung der im laufenden Intervall geänderten Variablen beschrieben. Eine Speicherung der Adressen der geänderten Variablen wird nicht offenbart.

Die Erfindung, wie sie in den Patentansprüchen definiert ist, löst die Aufgabe, das Verhältnis der Nutzarbeitszeitdauer zur Rettungszeitdauer zu verbessern.

Die vorliegende Erfindung basiert ebenfalls auf einer Speicherung der veränderten Variablen, jedoch wird nicht der vorherige, sondern der neue Wert gespeichert, also nach einem «Retten der Veränderungen».

Zur Wiederherstellung des früheren Zustandes wird dann von einem als zuverlässig eingestuften, früheren Zustand (Checkpoint) ausgegangen, an dem bei der Wiederherstellung alle Veränderungen seit Aufstellen des Checkpoints und bis zum letzten gültigen Rückzugspunkt nachgetragen werden. Damit wird einwandfrei der Zustand des Rechners am letzten, fehlerfrei erreichten Rückzugspunkt wiederhergestellt, ohne irgendeine Annahme über den Zustand des Arbeitsspeichers oder des Prozessors zu treffen.

Eine Einrichtung zur Rettung des Zustandes eines Rechners mit einem Kaskadenspeicher ist Gegenstand der Teilanmeldung EP-A-87 110 448.5 (Veröffentl. No. 0254247).

Die Erfindung wird nachstehend anhand von Ausführungsbeispielen erläutert. Es zeigen:

Fig. 1 ein Blockschaltbild eines Rechners mit einem Prozessor, einem Arbeits- und zwei Archivspeichern,

Fig. 2 ein Zeitdiagramm der Rettung des Rechnerzustandes durch zwei Archivspeicher, die nach einer Nutzarbeit aktualisiert werden,

Fig. 3 ein Zeitdiagramm der Rettung des Rechnerzustandes durch zwei Archivspeicher gemäss Fig. 1, wobei ein Archivspeicher während der Nutzarbeit aktualisiert wird und der andere danach,

Fig. 4 einen Stapelspeicher zur Verkürzung der Rettungszeit,

Fig. 5 die Verwendung eines Cache-Speichers zur Entlastung des Stapelspeichers gemäss Fig. 4,

Fig. 6 einen als Assoziativspeicher ausgebildeten Stapelspeicher gemäss den Fig. 4 und 5.

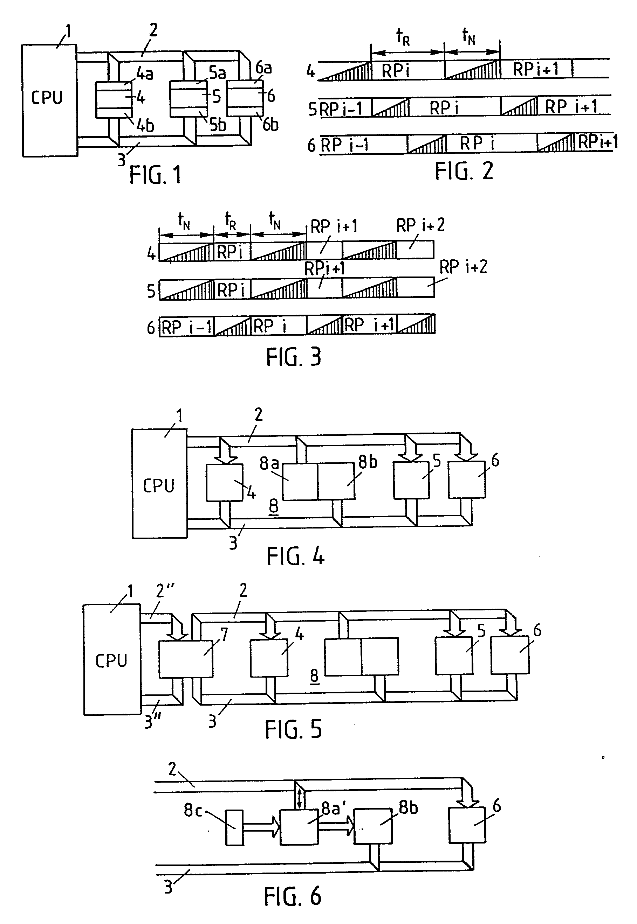

In Fig. 1 ist mit 1 ein Prozessor bezeichnet, mit 2 ein Adressenbus, mit 3 ein Datenbus, mit 4 ein Arbeitsspeicher, mit 5 und 6 zwei Archivspeicher bzw. mit 5 eine Archivspeicher-Zone 1 und mit 6 eine Archivspeicher-Zone 2. 4a, 5a und 6a bezeichnen Adressendekodierer im Arbeitsspeicher 4 bzw. in den Archivspeichern 5 und 6; 4b, 5b und 6b Kopierbereiche für den Prozessorzustand in dem Arbeitsspeicher 4 bzw. in den Archivspeichern 5 und 6.

Für den normalen Rechnerbetrieb ist nur der Prozessor 1 und sein Arbeitsspeicher 4 erforderlich. Die Archivspeicher 5 und 6 dienen der Fehlertoleranz. Beim Prozessorbus wurden der Adressenbus 2 und der Datenbus 3 bzw. die Adressen- und Datenleitungen getrennt gezeichnet, um die Erläuterungen zu vereinfachen. Es könnte sich ebensogut um einen multiplexierten Bus oder um einen seriellen Bus handeln.

Die Arbeit des Prozessors besteht aus: 1. Nutzarbeit, 2. Zustandsrettung und 3. Wiederherstellung des Zustandes nach Überwindung des Ausfalls.

Nutzarbeit: Die Nutzarbeit ist der normale Betrieb der Abarbeitung eines Nutzprogrammes. Wenn es während der Nutzarbeit zu einem Ausfall kommen sollte, dann unternimmt der Prozessor 1 nach der Reparatur eine Wiederherstellung, wie nachfolgend erläutert wird.

Die Nutzarbeit wird in Schritte eingeteilt, die Rückzugsblöcke oder kurz Blöcke heissen. Die Blöcke gelten als unteilbare Operationen: entweder werden sie fertig gerechnet, oder der Rechner kehrt zum Zustand vor dem Block zurück.

Rückzugspunkt: Der Zustand des Rechners zu einem beliebigen Zeitpunkt ist definiert durch den augenblicklichen Zustand des Nutzungsprogrammes, d. h. durch den Zustand seiner Variablen, durch den Zustand der internen Register des Prozessors und der nicht dargestellten Ein- und Ausgabegeräte, kurz E/A-Geräte genannt. Registerzustand und Zustand der E/A-Geräte werden als Prozessorzustand oder Kontext bezeichnet. Der Programmcode gehört hingegen nicht zum Zustand. Variablenzustand und Prozessorzustand bilden zusammen den Rechner- oder Aufgabenzustand. Der Prozessorzustand ist im Kopierbereich 4b des Arbeitsspeichers 4 gespeichert. Insgesamt enthält also der Arbeitsspeicher 4 den gesamten Aufgabenzustand.

Der Aufgabenzustand am Anfang eines Blokkes wird als Rückzugspunkt i, kurz RPi bezeichnet, der Zustand am Anfang des nächsten Blokkes als Rückzugspunkt i+1, kurz RPi+1.

Die Rückzugspunkte werden in regelmässigen Zeitabständen oder nach Bedarf gewählt. Der Zustand am Rückzugspunkt wird durch Abarbeitung eines Zustandsrettungsprogrammes festgehalten. Der Abstand zwischen benachbarten Rückzugspunkten ist durch die Anwendung gegeben. In schnellen Prozessen darf der Abstand einige 100 ms nicht überschreiten, in Datenverarbeitungsanwendungen darf er einige Stunden betragen.

Bei Ausfall innerhalb eines Blockes soll der Prozessor die abgebrochene Arbeit aufgeben und versuchen, nach Reparatur den Zustand RPi, wie er am Anfang des Blockes war, wieder herzustellen, um von dort aus den Block erneut abzuarbeiten. Dies ist die Aufgabe des Wiederherstellungsprogrammes.

Zustandsrettung und Archivspeicher: Es wird angenommen, dass bei Ausfall des Systems der Zustand des Prozessors 1 und des Arbeitsspeichers 4 verlorengeht. Damit der Aufgabenzustand nach der Reparatur wiederhergestellt werden kann, muss dieser bei jedem Rückzugspunkt in einen nicht flüchtigen, d.h. ausfallbeständigen Archivspeicher kopiert werden. Der Archivspeicher soll alle Informationen enthalten, die es ermöglichen, nach Überwindung eines Ausfalles die Arbeit dort wieder aufzunehmen, wo sie im Zeitpunkt des Ausfalles oder kurz davor unterbrochen wurde.

Die Zustandsrettung kann parallel zur Nutzarbeit oder nach der Nutzarbeit stattfinden. Zunächst nehmen wir an, dass Nutzarbeit und Zustandsrettung hintereinander stattfinden.

Am Anfang eines Blockes enthält der Archivspeicher den Zustand RPi. Wenn ein Block fehlerfrei fertiggerechnet wurde, dann wird der Zustand des Prozesses RPi+1 aus dem Arbeitsspeicher 4 in den Archivspeicher 5 kopiert, und der nächste Block kann beginnen.

Die Kopieroperation aus dem Arbeitsspeicher in den Archivspeicher kann durch den Prozessor 1 selbst ausgeführt werden, indem er eine Zelle des Arbeitsspeichers 4 zum Lesen adressiert und die entsprechende Zelle des Archivspeichers 5 zum Schreiben.

Anstelle des Prozessors 1 kann ein nicht dargestelltes Steuergerät mit direktem Speicherzugriff die Kopierarbeit etwas schneller als der Prozessor durchführen.

Der Archivspeicher 5 sollte die gleiche Organisation wie der Arbeitsspeicher aufweisen, d.h., er sollte gleich viel Speicherplätze mit der gleichen Einteilung wie der Arbeitsspeicher 4 haben. Zu jeder Speicherzelle im Arbeitsspeicher 4 gibt es eine entsprechende Speicherzelle im Archivspeicher 5. Die Busadressen der entsprechenden Speicherzellen im Arbeitsspeicher 4 und im Archivspeicher 5 brauchen nicht übereinzustimmen, sie können sich z.B. im höchstwertigen Bit unterscheiden, um den Schaltungsaufwand zu verringern. Es ist jedoch vorteilhaft, wenn bei entsprechenden Speicherzellen vom Arbeitsspeicher 4 und Archivspeicher 5 die Adresse relativ zum Speicheranfang die gleiche ist.

Ausserdem nehmen wir zunächst an, dass der Archivspeicher 5 annähernd so schnell wie der Arbeitsspeicher 4 ist. Der Archivspeicher 5 könnte z.B. ein gepufferter CMOS-Lese-/Schreibspeicher, ein nichtflüchtiger Lese-/Schreibspeicher RAM, wie er z.B. unter der Bezeichnung INTEL 2004 im Handel erhältlich ist, oder ein langsamerer Speicher, wie z.B. ein Kernspeicher, sein.

Andere nichtflüchtige Speicher, wie EAROM oder EEPROM eignen sich für diese Aufgabe weniger, denn sie sind im Schreiben um Grössenordnungen bis zu 10 000 langsamer als der benötigte Arbeitsspeicher. Eine Diskette, optische und magnetische Platte sind nicht nur aus Geschwindigkeitsgründen problematisch, ihre Organisation unterscheidet sich vom linearen Aufbau eines Speichers beträchtlich, und es muss erst eine geeignete Abbildung hergestellt werden.

Wiederherstellung: Die Wiederherstellung besteht darin, dass der Prozessor 1 nach überstandener Reparatur auf seine Zuverlässigkeit hin in Selbst- oder Fremdtest geprüft wird. Dann lädt der Prozessor oder das Steuergerät mit direktem Speicherzugriff den Aufgabezustand, der im Archivspeicher 5 abgelegt wurde, wieder in den Arbeitsspeicher 4. Danach werden die E/A-Geräte und der Prozessor 1 mit ihrem internen Zustand (Prozessorenzustand) geladen. Zuletzt wird der Programmzähler des Prozessors 1 gesetzt, und die Nutzarbeit kann wieder beim letzten Rückzugspunkt beginnen.

Verdoppelung des Archivspeichers: Während des Kopierens des Rückzugspunktes in den Archivspeicher 5 ist der Archivspeicher 5 inkonsistent, er enthält Teile aus dem RP i und Teile aus dem RP i+1. Die Kopieroperation sollte unteilbar sein, d.h., sie wird entweder voll ausgeführt oder gar nicht. Da die Kopieroperation eine endliche Zeit dauert, ist die Wahrscheinlichkeit eines Ausfalles während dieser Zeit nicht vernachlässigbar. Der Archivspeicher 5 verliert zwar keine Information im Falle eines Ausfalles, aber die Zone bzw. der Speicherbereich, der zum Zeitpunkt des Ausfalles in Bearbeitung bzw. in Nachführung war, ist inkonsistent und gilt als verloren.

Aus diesem Grund wird der Archivspeicher in zwei identische Hälften, die Archivspeicherbereiche 5 und 6, aufgeteilt. Der Prozessor 1 kann in beide Bereiche des Archivspeichers 5, 6 schreiben, jedoch nicht zur gleichen Zeit. Kein Ausfall soll den Prozessor 1 dazu bringen, den Teil des Archivspeichers zu verändern, mit dem er gerade nicht arbeitet.

Am Anfang eines Blockes enthalten beide Bereiche 5 und 6 des Archivspeichers denselben Inhalt, nämlich je eine Kopie des Arbeitsspeichers 4 (Prozesszustand am RP i). Beide Archivspeicher bzw. Archivspeicherbereiche werden nacheinander aktualisiert, d.h. aus RP i+1 gebracht. Als Konvention nehmen wir an, dass zuerst der Archivspeicher 5 aktualisiert wird und danach der Archivspeicher 6.

Die Zustandsrettung erfolgt folgendermassen:
1) der Prozessor markiert den Archivspeicher 5 als ungültig,
2) er kopiert den Inhalt des Arbeitsspeichers 4 in den Archivspeicher 5 hinein,
3) er markiert den Archivspeicher 5 wieder als gültig.

Die Kopien können mit der physikalischen oder mit einer logischen Uhrzeit zur Markierung ihrer Gültigkeit versehen werden.

Derjenige Speicherbereich des Archivspeichers, der gerade in Bearbeitung ist, wird als «schmutziger» Bereich und der andere als «sauberer» Bereich bezeichnet.

Der Prozessor 1 führt die Zustandsrettung zunächst mit dem Archivspeicher 5 aus. Dann werden die Rollen der schmutzigen und sauberen Bereiche vertauscht. Der Prozessor 1 führt dann die gleiche Operation mit dem Archivspeicher 6 aus.

Wenn es während des Kopierens einer der beiden Speicherbereiche zu einem Ausfall kommt, dann ist immer eine der Kopien sauber, unter der Annahme, dass der Prozessor 1 den Bereich des Archivspeichers, mit dem er gerade nicht arbeitet, auch bei Ausfall nicht verändern kann.

Aus Fig. 2 ist der Ablauf der Operationen ersichtlich. Die schraffierten Zonen bedeuten, dass die betreffende Zone in Bearbeitung ist. Rückzugspunkte sind mit RP i–1, RP i und RP i+1 bezeichnet. $t_R$ bezeichnet die Rettungszeitdauer und $t_N$ die Nutzarbeitszeitdauer. Während der Aktualisierung des Archivspeichers 5 bleibt der Inhalt des Archivspeichers 6 unverändert, während der Aktualisierung des Archivspeichers 6 bleibt der Inhalt des Archivspeichers 5 unverändert.

Wiederherstellung: Wenn ein Ausfall während der ersten Kopie stattfindet, dann kehrt der Prozessor wieder auf den letzten Rückzugspunkt RP i zurück, wenn er während der zweiten Kopie stattfindet, dann fängt der Prozessor 1 mit dem neuen Rückzugspunkt RP i+1 an. Wenn beide Kopien gültig sind und den gleichen RP enthalten, dann nimmt der Prozessor 1 irgendeine Kopie.

Ein Wiederherstellungsprogramm prüft nach überstandener Reparatur, welche Hälfte des Archivspeichers einen gültigen RP enthält, und wenn dies auf beide Hälften zutrifft, dann wird der jüngere RP ausgewählt. Dann wird die Aufgabe ab diesem Punkt wiederaufgenommen.

Zahlenbeispiel: Es wird hier nur ein 8-Bit-Prozessor betrachtet, die Erweiterung auf 16-Bit- oder 32-Bit-Prozessoren ist trivial.

Bei einem typischen Programm wird der Adressraum M auf 64 KB (1 KB = 1024 Worte) bemessen. Obwohl der Adressraum nie ganz aufgefüllt ist, müssen doch, um dem schlimmsten Fall vorzubeugen, alle 64 KB, also 65 536 Worte, gerettet werden.

Ein üblicher Mikroprozessor führt pro Sekunde etwa $10^6$ Lese- oder Schreiboperationen aus. Jede Operation dauert 1 µs. Der Prozessor oder eine Steuereinrichtung mit direktem Speicherzugriff benötigen zwei Speicherübertragungen von je 1 µs um ein Wort (2 Byte) aus dem Arbeitsspeicher 4 in den Archivspeicher 5 oder 6 zu übertragen (eine Lese- und eine Schreiboperation), so dass die Rettungszeit $t_R$ für ein Wort

$$ts = 2 \text{ µs}$$

beträgt. Damit dauert die Zustandsrettung

$$t_R = 2 \times 65\,536 \text{ µs} \approx 262 \text{ ms}.$$

Diese Zeit kann bei zeitkritischen Anwendungen beträchtlich sein, bei vielen Anwendungen ist sie jedoch zulässig.

Vereinfachung der Zustandsrettung: Die oben beschriebene Zustandsrettung ist insbesondere bei einem grossen Speicher zeitraubend. Damit ein vernünftiges Verhältnis zwischen Nutzarbeit und Rettungszeitdauer besteht, sollen die Rückzugsblöcke mindestens so lang wie die doppelte Rettungszeitdauer sein, was in zeitkritischen Anwendungen nicht immer tolerierbar ist.

Mit den nachstehend beschriebenen Methoden kann die Rettungszeitdauer wesentlich reduziert werden. Anstatt dass der Prozessor 1 beide Speicherbereiche einzeln schreibt, kann einer der Speicherbereiche schon während der Nutzarbeit aktualisiert werden. Dies geschieht dadurch, dass der schmutzige Archivspeicherbereich die Aktivität auf dem Bus verfolgt und sich entsprechend aktualisiert.

Während des normalen Betriebes wird der Zustand des Arbeitsspeichers 4 entsprechend dem Programmfortschritt geändert. Jede Änderung des Arbeitsspeichers 4 geht auf eine Schreiboperation auf dem Prozessorbus zurück. Der schmutzige Teil des Archivspeichers verfolgt diese Aktivität auf dem Bus, im Prinzip ohne den Verkehr zu stören. Man könnte auch zulassen, dass der Archivspeicher 5 die Zyklen etwas langsamer ablaufen lässt, damit er mitkommt. Die Bedingung ist also, dass der Bus so betrieben werden kann (in broadcast), dass mehrere Empfänger auf dem Bus gleichzeitig mithören können.

Jedesmal, wenn eine Speicherzelle durch eine Schreiboperation verändert wird, führt der schmutzige Archivspeicher die gleiche Änderung in seiner Kopie dieser Speicherzelle aus. Der saubere Teil des Archivspeichers wird nicht verändert.

Am Ende des Blockes schreibt der Prozessor seinen Zustand und z.B. die Uhrzeit im Arbeitsspeicher (und damit auch im Archivspeicher 5) und meldet dessen Zustand somit als gültig. Der schmutzige Archivspeicher enthält jetzt den Zustand des Arbeitsspeichers 4 und des Prozessors 1 am Ende des Blockes RP i+1. In diesem Moment enthalten beide Speicherbereiche des Archivspeichers wieder einen konsistenten Zustand, nämlich denjenigen am Anfang (RP i, sauberer Speicherbereich 6) und denjenigen am Ende des Blockes (RP i+1, ehemals schmutziger Speicherbereich 5).

Jetzt werden die Rollen der sauberen und schmutzigen Speicherbereiche vertauscht, und der Prozessor 1 kopiert den Endzustand RP i+1 in den ehemalig sauberen Speicherbereich hinein, wie eingangs beschrieben. Der alte saubere Speicherbereich wird damit auf den gleichen Stand wie der gültige neue gebracht, er enthält ebenfalls die Uhrmarke und wird gültig gemeldet. Der Abschluss der Zustandsrettungsoperation definiert den neuen Rückzugspunkt RP i+1.

Fig. 3 zeigt den Ablauf der Operationen.

Dieses Verfahren erlaubt es auch, für den Archivspeicher einen langsameren Speicher zu verwenden als für den Arbeitsspeicher, denn der Archivspeicher wird nur für die Schreibzyklen in Anspruch genommen. Im allgemeinen nimmt man an, dass im Durchschnitt ein Schreibzyklus auf 9 Lesezyklen vorkommt.

Bei dem in Verbindung mit Fig. 3 beschriebenen Verfahren wird die Rettungszeit um die Hälfte, in unserem Beispiel von 262 ms auf 131 ms reduziert. Der Archivspeicher darf dabei etwa 9mal langsamer als der Arbeitsspeicher sein.

Fig. 4 zeigt ein Ausführungsbeispiel, bei dem ein Stapelspeicher 8 mit einem Adressenspeicherbereich 8 a und einem Datenspeicherbereich 8 b zwischen dem Arbeitsspeicher 4 und den Archivspeichern 5 und 6 vorgesehen und an den gleichen Adressenbus 2 und Datenbus 3 angeschlossen ist. Am Anfang eines Blockes ist der Datenspeicher 8 leer. Alle Änderungen am Arbeitsspeicher 4 werden zugleich im Stapelspeicher 8 eingetragen sowie in einem der Archivspeicher (schmutzige Zone). Ohne den Prozessor zu beanspruchen wird im Stapelspeicher 8 für jeden Schreibzugriff auf den Bus das dazugehörige Adress-/Datenpaar registriert und eingetragen. Der Stapelspeicher kann als FIFO (first-in, firstout) oder STACK (first-in, last-out) organisiert sein. Es werden alle Adress-/Datenpaare in der Reihenfolge ihres Auftretens eingetragen, und ein Zähler bzw. ein Stapelzeiger hält den jeweiligen Füllstand des Speichers fest und weist den neuen Wertepaaren ihren Platz zu. Am Ende eines Blockes enthält also der Stapelspeicher alle Daten, die seit dem Anfang des Blockes geändert wurden.

Der zweite Archivspeicher 6 wird dadurch aktualisiert:

1) dass er als ungültig markiert wird,
2) dass alle Einträge vom Stapelspeicher in den Archivspeicher 6 übertragen werden und
3) dass er wieder als gültig markiert wird.

Der erste Archivspeicher 5 wurde bereits aktualisiert, entweder durch Zuhören, wie oben beschrieben, oder mit dem gleichen Verfahren wie der Archivspeicher 6.

Der Stapelspeicher 8 reduziert die Zeitdauer für die Zustandsrettung, da er alle nötigen Informationen für die Zustandsrettung in geordneter Form enthält. Es braucht nicht mehr der gesamte Inhalt des Arbeitsspeichers in den Archivspeicher 6 übertragen zu werden, sondern nur noch der Teil, der seit dem letzten Rückzugspunkt verändert wurde.

Zahlenbeispiel:

Wenn bei jedem Rückzugspunkt der Arbeitsspeicher 4 gerettet werden muss, dann ist die Rettungszeitdauer ohne Stapelspeicher 8:

$t_R = M \cdot ts$
und mit Stapelspeicher 8:
$t_R = L \cdot ts = (tnarb/tm) \cdot ts$,
worin L den effektiv ausgefüllten Teil des Stapelspeichers 8 bezeichnet, tm die mittlere Zeit zwischen zwei Schreibzyklen und tnarb die mittlere Nutzarbeitszeitdauer zwischen zwei Rückzugspunkten. Damit wird die Rettung des Stapelspeichers gegenüber der Rettung des Arbeitsspeichers 4 vorteilhaft, wenn

$tnarb/tm < M$

ist. Für ts = 1 µs und M = 65 536 beträgt die Rettungszeitdauer ohne Stapelspeicher 8 $t_R$ = 65,5 ms. Für tm = 10 µs wird die Lösung mit dem Stapelspeicher 8 dann vorteilhaft, wenn tnarb < 655 ms ist.

Es ist anzustreben, dass die Effizienz eff, d.h. das Verhältnis von Nutzarbeitszeitdauer zur Rettungszeitdauer, viel grösser als 1 ist. Im Falle der Rettung des Arbeitsspeichers 4 ist die Rettungszeitdauer fest. Die Effizienz beträgt dabei

$eff = tnarb/t_R = tnarb/M \cdot ts$.

Bei Verwendung eine Stapelspeichers 8 ist die Effizienz eine Konstante:

$eff = ts/tm$.

Der Umfang des Stapelspeichers kann wesentlich verringert werden, wenn man zwischen Prozessor 1 und Stapelspeicher 8 einen Cache-Speicher 7 einschaltet, wie es bei vielen Rechnern der Fall ist, vgl. z.B. die obengenannte Veröffentlichung in Proceedings in 1976. Fig. 5 zeigt ein Ausführungsbeispiel mit einem derartigen Cache-Speicher 7. Der erste Archivspeicher 5 kann z.B. durch Mithören aktualisiert werden. Der Stapelspeicher 8 tritt als Hintergrundspeicher auf. Er ist z.B. als FIFO oder STACK organisiert. Am besten eignet sich wieder die als Rückspeichern bezeichnete Betriebsart des Cache-Speichers. Um den gesamten Rechnerzustand am Rückzugspunkt zu retten, ist es jedoch nötig, den Inhalt des Cache-Speichers hinauszuschreiben. Es wurden verschiedene Methoden dazu bereits beschrieben. Die Effizienz dieses Verfahrens ist anwendungsabhängig und eignet sich am besten, wenn die Adressen der Variablen Gruppen bilden. Dies ist z.B. bei allen modernen Programmiersprachen der Fall.

Die Rettungszeit kann durch eine andere Organisation des Stapelspeichers verkürzt werden, wie anhand von Fig. 6 gezeigt werden soll.

Der Stapelspeicher 8 wurde bisher als linearer Speicher (FIFO oder STACK) organisiert. Dort kommt es vor, dass die gleiche Adresse mehrfach auftaucht, weil eine Variable , z.B. eine Laufvariable in einer Schleife, mehrere Male verändert wurde. Die Anzahl der Eintragungen im Stapelspeicher 8 könnte verringert werden, wenn nur der letzte Wert der Variablen aufbewahrt würde. Dann wäre es möglich, einen Archivspeicher einzusetzen, der wesentlich langsamer als der Stapelspeicher ist.

Um dies zu erreichen, ist der Stapelspeicher 8 mit einem Assoziativspeicher versehen, der einen assoziativen Adressenspeicher 8 a', einen assoziativen Datenspeicherbereich 8 b und einen Zähler 8 c aufweist.

Bei jedem Schreibzyklus auf dem Prozessorbus liest der Stapelspeicher die Adresse. Er vergleicht sie mit den Eintragungen in seiner Adresstabelle, indem die Adresse am sogenannten Schlüssel-Eingang des assoziativen Speichers angelegt wird. Falls die Adresse nicht gefunden wird, wird sie als neuer Eintrag in den Assoziativspeicher eingelesen. Der Zähler 8 c weist ihr ihre Position zu, er wird danach um eine Stelle erhöht. Von jetzt an gilt die Adresse als vorhanden. Falls die Adresse bereits vorhanden ist oder gerade eingetragen wurde, erscheint die Position dieser Adresse auf dem sogenannten Positionsausgang zum Datenspeicherbereich 8 b. Die Positionsadresse hat die gleiche Breite wie der Zähler 8 c. Daraufhin wird das zugehörige Datum im Datenspeicherbereich 8b festgehalten. Der Datenspeicher ist ein normaler Halbleiterspeicher.

Beim Retten des Stapelspeichers 8 in den Archivspeicher 6 adressiert der Prozessor 1 den Zähler 8 c und erzwingt damit eine Positionsadresse auf den Positionsleitungen und auf den Adressleitungen. In diesem Modus treibt der Prozessor 1 die Adressleitungen nicht, sondern lässt sie schweben. Der Prozessor 1 ist zu diesem Zweck z. B. durch ein Gatter mit drei Zuständen gepuffert.

Alle Positionen des Zählers werden adressiert. Die entsprechenden Adress-/Datenpaare werden auf die Adress- und Datenleitungen gegeben und in den Archivspeicher 6 geladen. Jedesmal wird der Zähler 8 c herabgesetzt, bis der Stapelspeicher 8 leer ist. Damit ist die Rettung des Rückzugspunktes abgeschlossen.

Die Effizienz dieses Verfahrens ist anwendungsabhängig und beträgt:

$$eff = tm/ts \cdot fb.$$

**Patentansprüche**

1. Einrichtung zur Rettung des Zustandes eines Rechners an Programmrückzugspunkten in dem von dem Rechner abzuarbeitenden Programm, wobei der Rechner an seinem Adress- und Datenbus (2, 3) einen Arbeitsspeicher (4), einen Prozessor (1) mit mindestens einem internen Register, eine Ein-/Ausgabeeinheit ebenfalls mit mindestens einem internen Register und einen Zwischenspeicher (8) aufweist und wobei der Arbeitsspeicher während des Programmablaufs jeweils den aktuellen Rechnerzustand einschliesslich der Inhalte der genannten Register enthält, dadurch gekennzeichnet, dass zur Speicherung des Rechnerzustandes an den Programmrückzugspunkten ($RP_{i-1}$, $RP_i$, $RP_{i+1}$ ...) zusätzlich ein erster ausfallbeständiger Archivspeicher (6) an den genannten Adress- und Datenbus (2, 3) angeschlossen ist, dass der Zwischenspeicher (8) selbsttätig alle Änderungen von Daten im Arbeitsspeicher (4) einschliesslich ihrer zugehörigen Adressen synchron registriert und dass Mittel zur Übertragung des Inhalts des Zwischenspeichers an jedem Programmrückzugspunkt in den ersten Archivspeicher vorgesehen sind.

2. Einrichtung nach Anspruch 1, dadurch gekennzeichnet, dass der Zwischenspeicher (8) ein sog. FIFO-Speicher ist.

3. Einrichtung nach Anspruch 1, dadurch gekennzeichnet, dass der Zwischenspeicher ein STACK-Speicher ist.

4. Einrichtung nach Anspruch 1, dadurch gekennzeichnet, dass der Zwischenspeicher ein Assoziativspeicher ist.

5. Einrichtung nach einem der Ansprüche 1 bis 4, dadurch gekennzeichnet, dass zwischen dem Prozessor und dem Adress- und Datenbus ein Cache-Speicher (7) vorgesehen ist.

6. Einrichtung nach einem der Ansprüche 1 bis 5, dadurch gekennzeichnet, dass an den Adress- und Datenbus ein zweiter ausfallbeständiger Archivspeicher (5) angeschlossen ist, welcher selbsttätig alle Änderungen von Daten im Arbeitsspeicher (4) synchron registriert.

**Claims**

1. Device for saving the status of a computer at programme recovery points in the programme to be processed by the computer, the computer exhibiting on an address and databus (2, 3) a main memory (4), a processor (1) having at least one internal register, an input/output unit, also with at least one internal register, and a temporary memory (8) and the main memory containing during the programme run in each case the current computer status including the contents of the said registers, characterized in that, for storing the computer status at the programme recovery points ($RP_{i-1}$, $RP_i$, $RP_{i+1}$ ...), a first fault-tolerant archival memory (6) is additionally connected to the said address and databus (2, 3), that the temporary memory (8) automatically synchronously registers all changes of data in the main memory (4) including their associated addresses and that means are provided for transferring the content of the temporary memory into the first archival memory at each programme recovery point.

2. Device according to Claim 1, characterized in that the temporary memory (8) is a so-called FIFO memory.

3. Device according to Claim 1, characterized in that the temporary memory is a STACK memory.

4. Device according to Claim 1, characterized in that the temporary memory is an associative memory.

5. Device according to one of Claims 1 to 4, characterized in that a Cache memory (7) is provided between the processor and the address and data bus.

6. Device according to one of Claims 1 to 5, characterized in that a second fault-tolerant archival memory (5), which automatically synchronously registers all changes of data in the main memory (4), is connected to the address and databus.

**Revendications**

1. Dispositif pour la sauvegarde de l'état d'un ordinateur aux points de reprise de programme dans le programme à traiter par l'ordinateur, l'ordinateur comportant sur un bus d'adresses et de données (2, 3), une mémoire de travail (4), un processuer (1) avec au moins un registre interne, une unité d'entrée/sortie avec également au moins un registre interne et une mémoire intermédiaire (8), et la mémoire de travail contenant, pendant le déroulement du programme, toujours l'état d'ordinateur du moment y compris les contenus des registres cités, caractérisé en ce que, pur le stockage de l'état de l'ordinateur aux points de reprise de programme (RPi-1, RPi, RPi+1, ...), une première mémoire d'archivage résistant aux pannes (6) est connectée en supplément aux dits bus d'adresses et de données (2, 3), que la mémoire intermédiaire (8) enregistre automatiquement de manière synchrone toutes les modifications de données dans la mémoire de travail (4) y compris leurs adresses associées et que des moyens sont prévus pour transférer le contenu de la mémoire intermédiaire à chaque point de reprise de programme, dans la première mémoire d'archivage.

2. Dispositif suivant la revendication 1, caractérisé en ce que la mémoire intermédiaire (8) est une mémoire dite FIFO.

3. Dispositif suivant la revendication 1, caractérisé en ce que la mémoire intermédiaire est une mémoire STACK.

4. Dispositif suivant la revendication 1, caractérisé en ce que la mémoire intermédiaire est une mémoire associative.

5. Dispositif suivant l'une quelconque des revendications 1 à 4, caractérisé en ce qu'une anté-mémoire (7) est prévue entre le processeur et les bus d'adresses et de données.

6. Dispositif suivant l'une quelconque des revendications 1 à 5, caractérisé en ce qu'une deuxième mémoire d'archivage résistant aux pannes (5) qui enregistre automatiquement de manière synchrone toutes les modifications de données dans la mémoire de travail (4) est connectée aux bus d'adresses et de données.

FIG. 1

FIG. 2

FIG. 3

FIG. 4

FIG. 5

FIG. 6